# EUROPEAN PATENT APPLICATION

(11) **EP 2 660 111 A1**
(43) Date of publication of application: **06.11.2013**
(21) Application number: 12382162.1
(22) Date of filing: 03.05.2012
(51) Int. Cl.: B60S 1/38

(54) **Windshield wiper blade**

(71) Applicant: Doga S.A., 08630 Abrera (ES)
(72) Inventor: Alcaine Santamaria, Manuel, 08630 Abrera (ES); Biosca Munts, Josep, 08630 Abrera (ES); Chicon Montoya, Carlos, 08630 Abrera (ES); Luque Pineda, Antonio, 08630 Abrera (ES)
(74) Representative: Oficina Ponti, SLP

(57) **Abstract**

Windshield wiper blade (1) comprising a wiping element (2) which in its working position is in contact with the windshield and a leaf spring (3) which provides the wiping element (2) with the adequate pressure against said windshield. Said leaf spring (3) is made of a compound material which comprises a thermo stable resin matrix, reinforcement fibers (9) distributed along the length of the leaf spring (3) and inorganic additives. A leaf spring is achieved which provides sufficient rigidity and flexibility for the blade to adapt to the windshield, with lengths greater than 750 mm, guaranteeing a correct wiping of the windshield without producing noises or other anomalies.

## Description

The present invention refers to a windshield wiper blade, designed primarily to supply the equipment needs of vehicles for public transportation.

### Background of the invention

The windshield wiper blades of the so-called "flat blade" type are known. These blades are primarily designed for automobiles, and their main virtue is their adaptability to the windshield, without the need for the conventional articulated metal frame.

In order to provide adaptability, these blades comprise a structural element which we shall call leaf spring, which is usually made of a strip of steel (spring), which provides the necessary flexing to achieve said adaptability. Currently, the windshield wiper blades of the "flat blade" type have dimensions of less than 750 mm, which does not allow their use in public transportation vehicles, such as motor coaches, due to the windshield's dimensions. Conventional blades with a metal structure are used for dimensions greater than 750 mm, since in "flat blade" type blades, it is difficult to control the torsions produced at the blade's edges during the wiping when using traditional materials, potentially producing disturbing noises in the blade's movement and an incorrect wiping of the windshield. Therefore, the need for a windshield wiper blade of the "flat blade" type that may be used in public transportation vehicles is evident, in particular enabling the windshield wiper blade to have a length greater than 750 mm and to correctly clean the windshield without producing noises or other anomalies.

### Description of the invention

With the windshield wiper blade of the invention, the aforementioned problems are solved, presenting other advantages that will be described.

The windshield wiper blade of the present invention comprises a wiping element which in its working position is in contact with the windshield and a leaf spring which provides the wiping element with the adequate pressure against said windshield, and is **characterized in that** said leaf spring is made of a compound material which comprises a thermo stable resin matrix, reinforcement fibers distributed along the length of the leaf spring and inorganic additives. Advantageously, this thermo stable resin matrix is made of polyester, and said reinforcement fibers are made of fiber glass or carbon fiber.

Said reinforcement fibers may be cut and/or continuous, as desired.

Advantageously, said leaf spring has a symmetrical, longitudinal curvature with respect to a central axis.

Said reinforcement fibers may be located in the leaf spring's lower section, or the leaf spring's upper section, and may have a circular, square or rectangular transversal section.

According to an embodiment, said reinforcement fibers are fibers arranged longitudinally or crossed on said leaf spring.

If desired, said reinforcement fibers are arranged by bands, with the bands on the ends being shorter than the central band or bands.

Advantageously, the length of the windshield wiper blade of the present invention is preferably greater than 750 mm. With the windshield wiper blade of the present invention the following advantages are attained:
- Enables its use in public transportation vehicles, such as motor coaches, since the leaf spring's material allows providing the necessary rigidity and flexibility for the blade to be adapted to the windshield, with lengths greater than 750 mm;
- Reduces the torsion that is produced at the edges in conventional blades of this size;
- Reduces the blade's weight, as compared with blades with a conventional metal structure;
- Ensures the adaptability of the wiping element to the windshield with the blade's lengths adequate for vehicles such as motor coaches;
- Reduces the number of elements and cost of the blade;
- Avoids costly paint processes necessary in the metallic elements to prevent their corrosion and degradation in the conventional blades;
- Provides better protection against ice;
- Reduces mechanic and aerodynamic noises;
- Enables to control the elastic behavior of the leaf spring by simply adjusting the orientation and the quantity of the fibers in the leaf spring.

### Brief description of the drawings

In order for a better understanding of what has been described above, there are some drawings attached wherein, schematically and only by way of a non limiting example, a practical embodiment is represented.
Figure 1 is a perspective view of the windshield wiper blade of the present invention;
Figure 2 is an exploded, perspective view of the windshield wiper blade of the present invention;
Figure 3 is a perspective view of the leaf spring of the windshield wiper blade of the present invention;
Figure 4 is a sectional transversal view of the windshield wiper blade of the present invention;
Figures 5a to 5f are sectional transversal views of the leaf spring of the windshield wiper blade of the present invention, according to different embodiments; and
Figures 6a to 6c are plan views of the leaf spring of the windshield wiper blade of the present invention, according to different embodiments.

### Description of a preferred embodiment

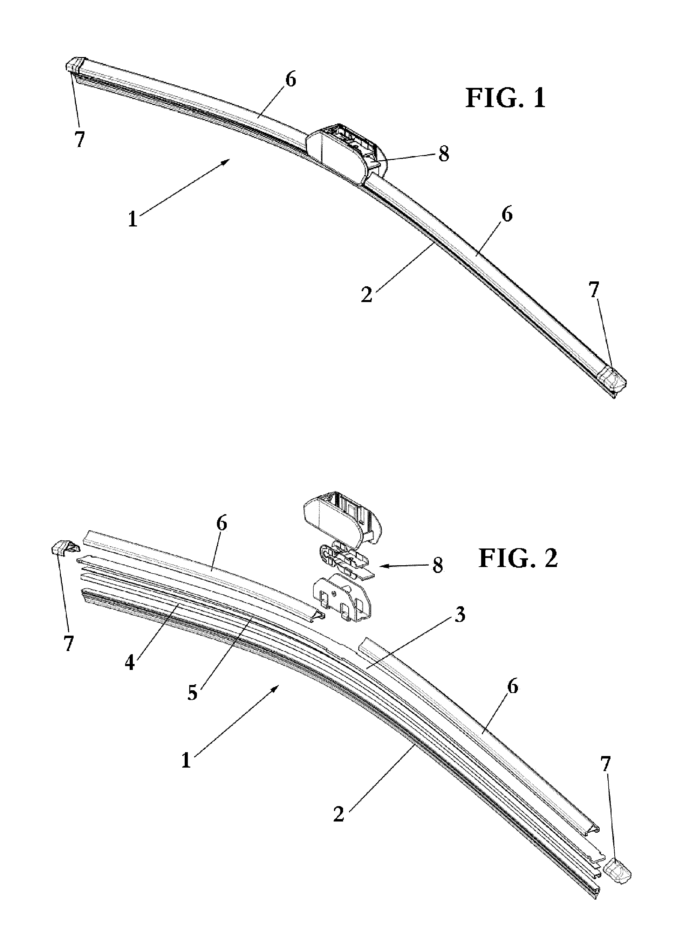

As shown in figures 1 to 4, the windshield wiper blade of the "flat blade" type, generally indicated by numerical reference 1, comprises a wiping element 2 connected to a leaf spring 3 through an extruded profile 4 with the use of an adhesive 5. Over said leaf spring 3 there are some upper profiles 6 arranged, comprising end elements 7 at their ends, as it may be seen in greater detail in figure 2.

As also shown in figures 1 and 2, the windshield wiper blade 1 further comprises an adapter 8 for its attachment to an arm of a windshield wiper (not represented).

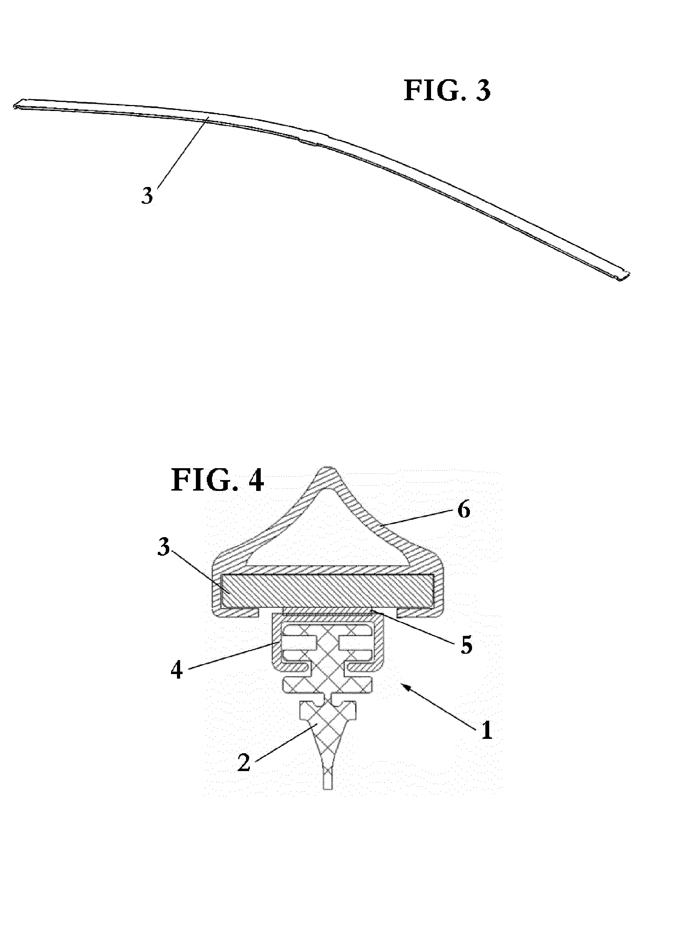

The leaf spring 3 is an elongated element with a rectangular plan which has a symmetrical, longitudinal curvature with respect to its central axis, as it may be seen in particular in figure 3.

Said leaf spring 3 is formed from a compound material which allows attaining windshield wiper blades of the "flat blade" type with a length greater than 750 mm.

Said compound material of the leaf spring 3 comprises a thermo stable resin matrix, reinforcement fibers 9, preferably fiber glass or carbon fiber and inorganic additives (agglomerate).

For example, said leaf spring may be made of polyester resin, with a percentage by weight of 70%, with reinforcement fibers 9 made of cut fiber glass, with a percentage by weight of 20% and reinforcement fibers 9 of continuous fiber glass, with a percentage by weight of 10%.

This mixture of components provides the adequate rigidity and flexibility for the blade 1 to be adapted to the windshield. Due to the blade's dimensions, preferably greater than 750 mm, this material was chosen, which may be controlled because its properties may be easily modified by simply adding more or less reinforcement fibers 9 to increase or decrease its rigidity or flexibility.

Additionally, the torsion that would be produced in a metal leaf spring of this size is reduced, since in order to achieve the flexibility effect desired in metal elements, it is necessary to use a thickness that is too thin, which would cause excessive torsion at the ends of the blade 1. However, using the compound material of the blade of the invention, these tensions may be avoided by increasing its thickness and reducing its weight.

Indicated below are, only by way of an example, some of the features of the leaf spring 3 of the windshield wiper blade of the present invention:
- Resistance to flexion: 457 MPa;
- Flexion module: 19813 MPa;
- Resistance to traction: 161 MPa;
- Traction module: 14244 MPa;
- Density: 1,88 g/cm³;
- Continuous fiber: 10%;
- Cut fiber: 20%;
- Color: Black;
- Contraction: 0,02%.

The curvature of the leaf spring 3 and, consequently, that of the blade 1 is symmetrical with respect to a central axis. In its position over the windshield, the blade 1 receives a central strength or load, which, when applied over the glass surface, receives an opposite load and it is distributed throughout the entire surface of the blade.

These strengths or loads should be balanced, so that the blade is adapted to the curvature of the windshield and applies the necessary friction to wipe the entire surface evenly. Until now, the windshield wiper blades of the "flat blade" type that provide this necessary friction had a maximum length of 750 mm, which made them inadequate for their use in vehicles with large dimension windshields, such as motor coaches.

Using the compound material in the leaf spring 3 of the windshield wiper blade 1 of the present invention, this friction is attained for blades longer than 750 mm.

Described below are different embodiments of arrangement of the reinforcement fibers in the windshield wiper blade of the present invention. Although they are described separately, it is clear that any combination of these reinforcement fibers 9 is possible.

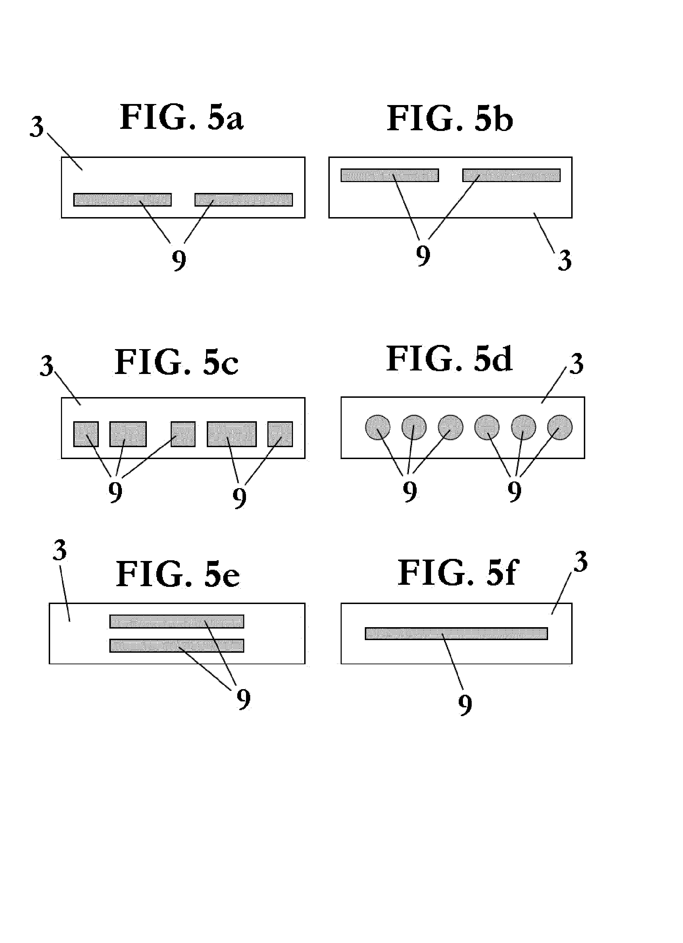

In figure 5a, the reinforcement fibers 9 have a rectangular section and are located on the lower section of the leaf spring 3, while in figure 5b they are located on the upper section of the leaf spring 3.

Meanwhile, in figure 5c, the reinforcement fibers 9 have a square and rectangular section, while in figure 5d they have a circular section.

In figure 5e, the reinforcement fibers 9 are two, while in figure 5f there is only one reinforcement fiber 9.

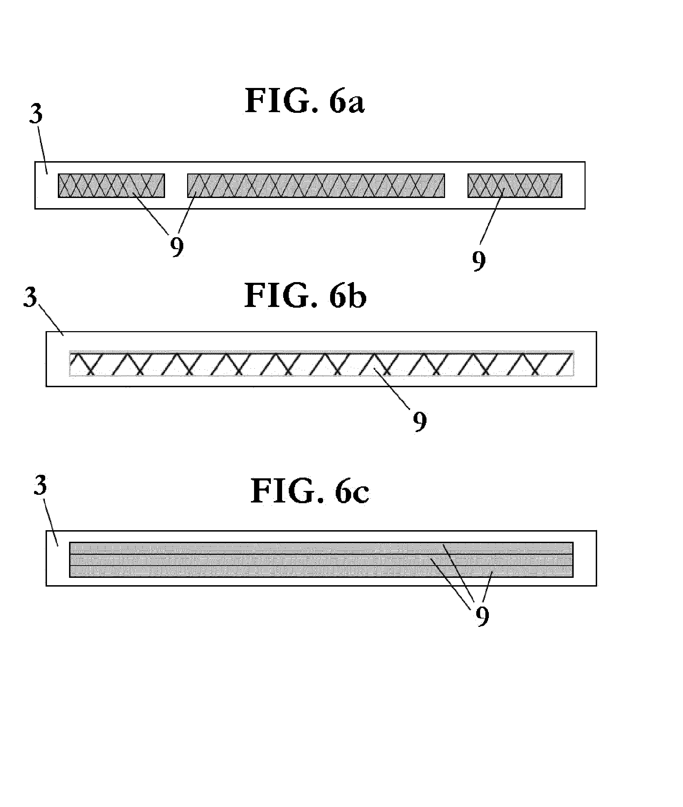

In figures 6a to 6c a leaf spring 3 has been represented viewed from above. It may be appreciated in these figures that the reinforcement fibers 9 may be arranged in a single band (figures 6b and 6c) or in several bands (figure 6a), and that these fibers may be arranged in a crossed or longitudinal manner. In figure 6a, the bands at the ends are shorter than the central band, although this should only interpreted as a non limitative example, since the bands could have any appropriate length.

Although a specific preferred embodiment of the invention has been referenced, it is evident to a person skilled in the art that the described windshield wiper blade is susceptible to numerous variations and modifications, and that all the details mentioned above may be substituted by other technically equivalent ones, without departing from the scope of protection as defined by the attached claims.

## Claims

1. Windshield wiper blade (1) which comprises a wiping element (2) which in its working position is in contact with the windshield and a leaf spring (3) which provides the wiping element (2) with the adequate pressure against said windshield, **characterized in that** said leaf spring (3) is made of a compound material which comprises a thermo stable resin matrix, reinforcement fibers (9) distributed along the length of the leaf spring (3) and inorganic additives.

2. Windshield wiper blade (1) according to claim 1, wherein said thermo stable resin matrix is made of polyester resin.

3. Windshield wiper blade (1) according to claim 1, wherein said reinforcement fibers (9) are made of fiber glass or carbon fiber.

4. Windshield wiper blade (1) according to claims 1 or 3, wherein said reinforcement fibers (9) are cut and/or continuous.

5. Windshield wiper blade (1) according to claim 1, wherein said leaf spring (3) has a symmetrical, longitudinal curvature with respect to a central axis.

6. Windshield wiper blade (1) according to claim 1, wherein said reinforcement fibers (9) are located in the lower section of the leaf spring (3).

7. Windshield wiper blade (1) according to claim 1, wherein said reinforcement fibers (9) are located in the upper section of the leaf spring (3).

8. Windshield wiper blade (1) according to claim 1, wherein said reinforcement fibers (9) have a circular, square or rectangular transversal section.

9. Windshield wiper blade (1) according to claim 1, wherein said reinforcement fibers (9) are fibers arranged longitudinally or crossed in said leaf spring (3).

10. Windshield wiper blade (1) according to claim 1, wherein said reinforcement fibers (9) are arranged by bands, with the bands on the ends being shorter than the central band or bands.

11. Windshield wiper blade (1) according to claim 1, wherein the length of the blade (1) is preferably longer than 750 mm.
